# EUROPEAN PATENT APPLICATION

(11) **EP 4 306 875 A1**
(43) Date of publication of application: **17.01.2024**
(21) Application number: 22780168.5
(22) Date of filing: 17.03.2022
(51) Int. Cl.: F25B 21/00

(54) **MAGNETIC REFRIGERATION DEVICE AND REGRIGERATION DEVICE**

(30) Priority: 29.03.2021 JP 2021054795
(71) Applicant: Daikin Industries, Ltd., Osaka-shi, Osaka 530-0001 (JP)
(72) Inventor: TANAKA, Mitsuhiro, Osaka-shi, Osaka 530-0001 (JP); UEDA, Akane, Osaka-shi, Osaka 530-0001 (JP)
(74) Representative: Hoffmann Eitle
(86) International application number: PCT/JP2022/012220
(87) International publication number: WO 2022/209948

(57) **Abstract**

A magnetic field application unit (20) includes: a core (21); and a first magnet (25) and a second magnet (26). The core (21) is spaced from magnetic working substances (11) in an axial direction. The first magnet (25) and the second magnet (26) are arranged between the core (21) and the magnetic working substances (11). The first magnet (25) and the second magnet (26) apply a magnetic field so that a magnetic flux flows in the in-plane direction of the magnetic working substances (11). The first magnet (25) and the second magnet (26) are configured to move in a circumferential direction relative to the magnetic working substances (11).

## Description

### TECHNICAL FIELD

The present disclosure relates to a magnetic refrigerator and a refrigeration apparatus.

### BACKGROUND ART

Patent Document 1 discloses a magnetic heat pump device in which a magnetic flux flows from an N pole to S pole of a permanent magnet via an N pole-side built-in yoke, an inter-material yoke, magnetic materials contained in material containers, another inter-material yoke, and an S pole-side built-in yoke in this order.

### CITATION LIST

### PATENT DOCUMENT

Patent Document 1: WO 2019/150817

### SUMMARY OF THE INVENTION

### TECHNICAL PROBLEM

The device of Patent Document 1 includes the permanent magnet and the built-in yokes disposed inside a main body, and multiple material containers and multiple inter-material yokes are disposed along an inner peripheral surface of the main body. This configuration increases the magnetic path and disadvantageously increases the size of the whole device.

An object of the present disclosure is to shorten the magnetic path by devising the arrangement of a magnet.

### SOLUTION TO THE PROBLEM

A first aspect of the present disclosure is a magnetic refrigerator including: a plurality of magnetic working substances (11) arranged at intervals in a circumferential direction; and a magnetic field application unit (20) that makes a relative movement with respect to the magnetic working substances (11) in the circumferential direction and applies a magnetic field to the magnetic working substances (11), wherein the magnetic field application unit (20) includes a first member (21) spaced from the magnetic working substances (11) in an axial direction, and a first magnet (25) and a second magnet (26) that are arranged between the first member (21) and the magnetic working substances (11) and apply a magnetic field so that a magnetic flux flows in an in-plane direction of the magnetic working substances (11), and the first magnet (25) and the second magnet (26) are configured to move relative to the magnetic working substances (11) in the circumferential direction.

According to the first aspect, the magnetic field application unit (20) includes: the first member (21); and the first magnet (25) and the second magnet (26). The first member (21) is axially spaced from the magnetic working substances (11). The first magnet (25) and the second magnet (26) are arranged between the first member (21) and the magnetic working substances (11). The first magnet (25) and the second magnet (26) apply a magnetic field so that a magnetic flux flows in the in-plane direction of the magnetic working substances (11). The first magnet (25) and the second magnet (26) are configured to move in a circumferential direction relative to the magnetic working substances (11).

This configuration shortens the magnetic path, thereby making it possible to downsize the entire magnetic refrigerator and improve the magnetic flux density. Using a magnet divided into multiple magnets makes assembly easier than using a single magnet having a strong magnetic force.

A second aspect of the present disclosure is an embodiment of the magnetic refrigerator of the first aspect. In the second aspect, when the magnetic working substance (11) through which the magnetic flux is flowing is viewed in the axial direction, the first magnet (25) and the second magnet (26) are arranged along both sides of the magnetic working substance (11) in the circumferential direction.

According to the second aspect, a magnetic flux is allowed to flow along the circumferential direction of the magnetic working substances (11). Further, magnets of the same shape can be used for the assembly.

A third aspect of the present disclosure is an embodiment of the magnetic refrigerator of the second aspect. In the second aspect, each of the first magnet (25) and the second magnet (26) has a radially outer side wider than a radially inner side.

According to the third aspect, adjusting the width of the magnet in accordance with the magnetic path can make the magnetic field strength of the magnetic working substances (11) constant.

A fourth aspect of the present disclosure is an embodiment of the magnetic refrigerator of the first aspect. In the fourth aspect, when the magnetic working substance (11) through which the magnetic flux is flowing is viewed in the axial direction, the first magnet (25) and the second magnet (26) are arranged along both sides of the magnetic working substance (11) in a radial direction.

According to the fourth aspect, a magnetic flux is allowed to flow in the radial direction of the magnetic working substances (11).

A fifth aspect of the present disclosure is an embodiment of the magnetic refrigerator of any one of the first to fourth aspects. In the fifth aspect, the magnetic field application unit (20) includes a third magnet (27), and the third magnet (27) is disposed between the first magnet (25) and the second magnet (26) when viewed in the axial direction.

According to the fifth aspect, the third magnet (27) arranged in this way can make the magnetic field strength of the magnetic working substances (11) high and constant.

A sixth aspect of the present disclosure is an embodiment of the magnetic refrigerator of any one of the first to fifth aspects. In the sixth aspect, each of the magnetic working substances (11) is provided with yokes (13) having a higher magnetic permeability than the magnetic working substance (11), and the yokes (13) are arranged along both sides of the magnetic working substance (11) overlapping with the first magnet (25) and the second magnet (26) when viewed in the axial direction.

According to the sixth aspect, causing the magnetic flux to flow through the yokes (13) at both sides of the magnetic working substance (11) allows the magnetic field to be applied uniformly to the magnetic working substance (11).

A seventh aspect of the present disclosure is directed to a refrigeration apparatus including: the magnetic refrigerator (10) of any one of the first to sixth aspects; and a heating medium circuit (2) configured to exchange heat with the magnetic refrigerator (10).

According to the seventh aspect, the refrigeration apparatus including the magnetic refrigerator (10) can be provided.

### BRIEF DESCRIPTION OF THE DRAWINGS

FIG. 1 is a piping system diagram of a refrigeration apparatus of a first embodiment.
FIG. 2 is a perspective view illustrating the configuration of a magnetic refrigerator.
FIG. 3 is an exploded perspective view illustrating the configuration of the magnetic refrigerator.
FIG. 4 is a plan view illustrating the configuration of the magnetic refrigerator.
FIG. 5 is a cross-sectional view taken along line A-A in FIG. 4 and viewed in the direction of arrows.
FIG. 6 is a side cross-sectional view illustrating a variation of the first embodiment.
FIG. 7 is a perspective view illustrating the configuration of a magnetic refrigerator of a second embodiment.
FIG. 8 is an exploded perspective view illustrating the configuration of the magnetic refrigerator.
FIG. 9 is a plan view illustrating the configuration of the magnetic refrigerator.
FIG. 10 is a cross-sectional view taken along line B-B in FIG. 9 and viewed in the direction of arrows.
FIG. 11 is a side cross-sectional view illustrating a first variation of the second embodiment.
FIG. 12 is a plan view illustrating a second variation of the second embodiment.
FIG. 13 is a cross-sectional view taken along line C-C shown in FIG. 12 and viewed in the direction of arrows.
FIG. 14 is a plan view illustrating the configuration of a magnetic refrigerator of a third embodiment.
FIG. 15 is a cross-sectional view taken along line D-D in FIG. 14 and viewed in the direction of arrows.
FIG. 16 is a side cross-sectional view illustrating a variation of the third embodiment.
FIG. 17 is a plan view illustrating the configuration of a magnetic refrigerator of a fourth embodiment.
FIG. 18 is a cross-sectional view taken along line E-E in FIG. 17 and viewed in the direction of arrows.

### DESCRIPTION OF EMBODIMENTS

### «First Embodiment»

A first embodiment will be described below.

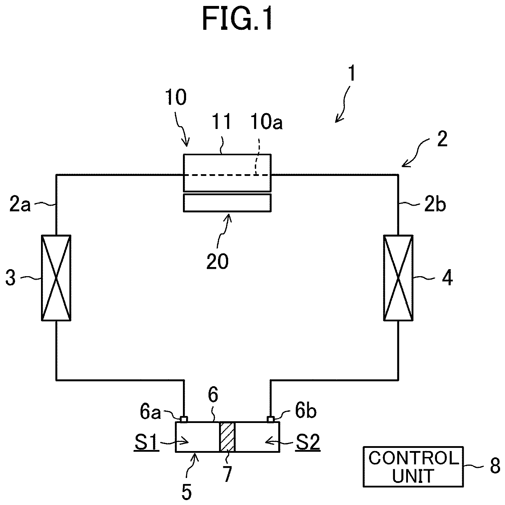

As illustrated in FIG. 1, a refrigeration apparatus (1) includes a heating medium circuit (2). The refrigeration apparatus (1) is applied to, for example, an air conditioner. The heating medium circuit (2) is filled with a heating medium. Examples of the heating medium include a refrigerant, water, and brine, for example.

The refrigeration apparatus (1) includes a low-temperature heat exchanger (3), a high-temperature heat exchanger (4), a pump (5), and a magnetic refrigerator (10). The magnetic refrigerator (10) controls the temperature of the heating medium using a magnetocaloric effect.

The heating medium circuit (2) is a closed loop circuit. The pump (5), the low-temperature heat exchanger (3), the magnetic refrigerator (10), and the high-temperature heat exchanger (4) are sequentially connected to the heating medium circuit (2).

The heating medium circuit (2) includes a low-temperature channel (2a) and a high-temperature channel (2b). The low-temperature channel (2a) connects a temperature control channel (10a) of the magnetic refrigerator (10) and a first port (6a) of the pump (5). The high-temperature channel (2b) connects the temperature control channel (10a) of the magnetic refrigerator (10) and a second port (6b) of the pump (5).

### <Low-Temperature Heat Exchanger and High-Temperature Heat Exchanger>

The low-temperature heat exchanger (3) exchanges heat between the heating medium cooled by the magnetic refrigerator (10) and a predetermined target to be cooled (e.g., a secondary refrigerant or air). The high-temperature heat exchanger (4) exchanges heat between the heating medium heated by the magnetic refrigerator (10) and a predetermined target to be heated (e.g., a secondary refrigerant or air).

### <Pump>

The pump (5) alternately repeats a first action and a second action. The first action conveys the heating medium in the heating medium circuit (2) to the left in FIG. 1. The second action conveys the heating medium in the heating medium circuit (2) to the right in FIG. 1. The pump (5) constitutes a conveying mechanism that causes the heating medium in the heating medium circuit (2) to flow reciprocally.

The pump (5) is constituted of a reciprocating piston pump. The pump (5) includes a pump case (6) and a piston (7).

The piston (7) is disposed to be able to move back and forth inside the pump case (6). The piston (7) divides the inside of the pump case (6) into a first chamber (S1) and a second chamber (S2). The pump case (6) has a first port (6a) and a second port (6b). The first port (6a) communicates with the first chamber (S1). The first port (6a) is connected to the low-temperature channel (2a). The second port (6b) communicates with the second chamber (S2). The second port (6b) is connected to the high-temperature channel (2b). The piston (7) is driven by a drive mechanism (not shown).

When the first action is made, the piston (7) moves toward the first port (6a). The first action reduces the volume of the first chamber (S1) and increases the volume of the second chamber (S2). As a result, the heating medium in the first chamber (S1) is discharged to the low-temperature channel (2a) through the first port (6a). Meanwhile, the heating medium in the high-temperature channel (2b) is sucked into the second chamber (S2) through the second port (6b).

When the second action is made, the piston (7) moves toward the second port (6b). The second action reduces the volume of the second chamber (S2) and increases the volume of the first chamber (S1). As a result, the heating medium in the second chamber (S2) is discharged to the high-temperature channel (2b) through the second port (6b). Meanwhile, the heating medium in the low-temperature channel (2a) is sucked into the first chamber (S1) through the first port (6a).

### <Control Unit>

The refrigeration apparatus (1) includes a control unit (8). The control unit (8) controls the operation of the pump (5) and the magnetic refrigerator (10) according to a predetermined operation command. The control unit (8) includes a microcomputer and a memory device (specifically, a semiconductor memory) storing software for operating the microcomputer.

### <Magnetic Refrigerator>

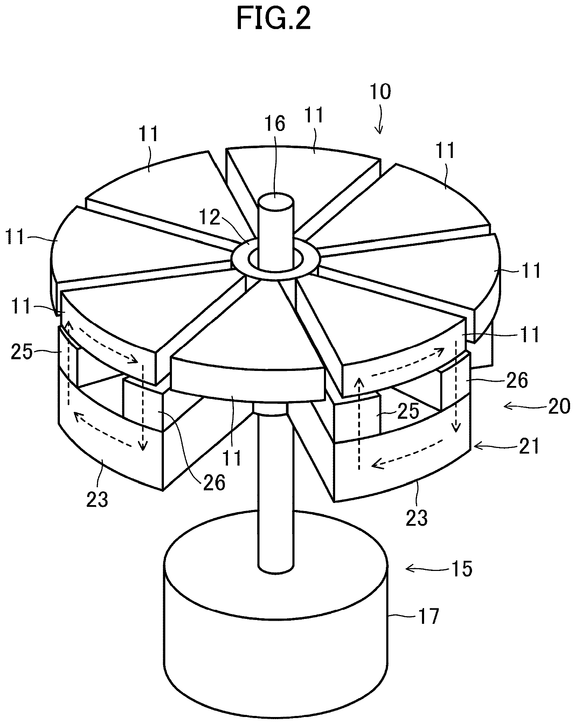

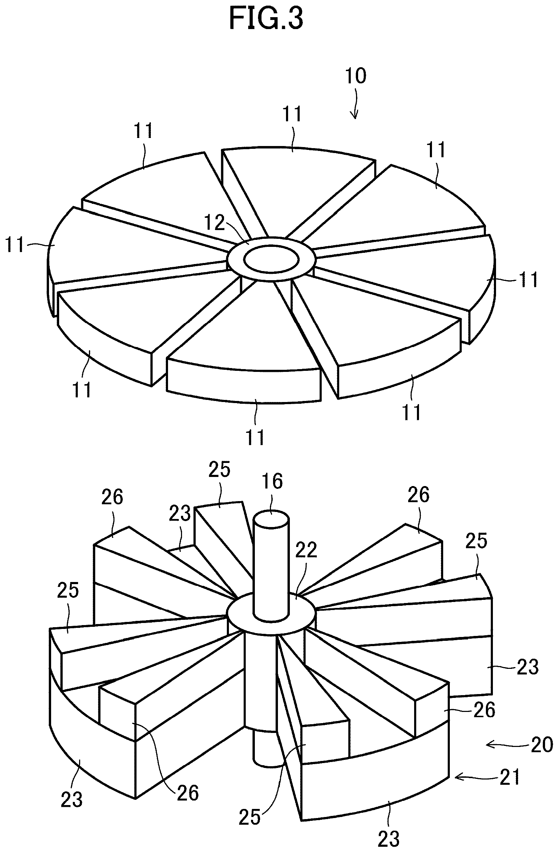

As illustrated in FIGS. 2 and 3, the magnetic refrigerator (10) includes magnetic working substances (11), a magnetic field application unit (20), and a rotation mechanism (15).

The magnetic working substances (11) generate heat when a magnetic field is applied to the magnetic working substances (11). The magnetic working substances (11) absorb heat when the magnetic field is removed. The magnetic working substances (11) also generate heat when the intensity of the applied magnetic field increases. The magnetic working substances (11) also absorb heat when the intensity of the applied magnetic field decreases.

Examples of the material of the magnetic working substances (11) include Gd₅(Ge_{0.5}Si_{0.5})₄, La(Fe₁₋ₓSiₓ)₁₃, La(Fe₁₋ₓCoₓSi_{y})₁₃, La(Fe₁₋ₓSiₓ)₁₃H_{y}, and Mn(As_{0.9}Sb_{0.1}), for example.

Multiple magnetic working substances (11) are arranged at intervals in the circumferential direction. In the example shown in FIG. 2, eight magnetic working substances (11), each having a substantially fan shape, are arranged at equal intervals in the circumferential direction. A cylindrical portion (12) is arranged radially inward of the magnetic working substances (11).

The cylindrical portion (12) is constituted of a tubular member extending in an axial direction. Multiple magnetic working substances (11) are attached to an outer peripheral surface of the cylindrical portion (12).

The rotation mechanism (15) includes a shaft (16) and a motor (17). The shaft (16) is connected to the motor (17). The motor (17) rotates the shaft (16). The magnetic field application unit (20) is connected to the shaft (16). The shaft (16) is inserted into the cylindrical portion (12). As the motor (17) rotates, the magnetic field application unit (20) rotates about the axis together with the shaft (16), while the magnetic working substances (11) are stationary. This allows the magnetic field application unit (20) to make a relative rotational movement with respect to the magnetic working substances (11).

The magnetic field application unit (20) is axially spaced from the magnetic working substances (11). The magnetic field application unit (20) applies a magnetic field to the magnetic working substances (11). The magnetic field application unit (20) includes a core (21) (a first member), a first magnet (25), and a second magnet (26).

The core (21) has a central portion (22) and multiple protrusions (23). The central portion (22) is constituted of a tubular member extending in the axial direction. The shaft (16) is fitted into the central portion (22). The shaft (16) is connected to the central portion (22) of the core (21). The central portion (22) does not have to be made of a magnetic material.

The protrusions (23) are made of a magnetic material. The protrusions (23) protrude radially outward from the central portion (22). The protrusions (23) are arranged at intervals in the circumferential direction. In the example shown in FIG. 3, four protrusions (23), each having a substantially fan shape, are arranged at equal intervals in the circumferential direction. The protrusions (23) are axially spaced from the magnetic working substances (11).

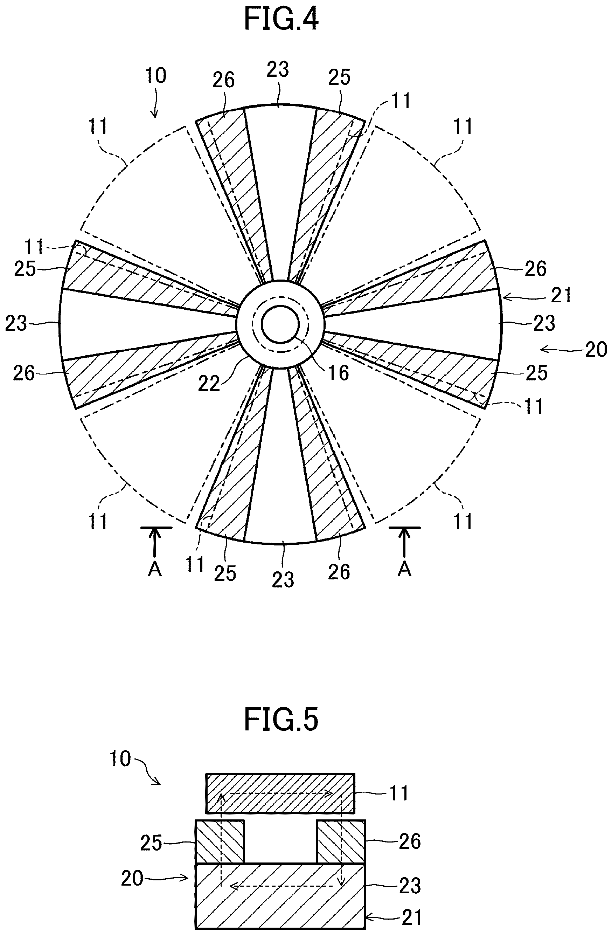

As also illustrated in FIG. 4, a circumferential width of a radially outer side of each protrusion (23) of the core (21) is greater than a circumferential width of a radially outer side of each magnetic working substance (11). An interval between the protrusions (23) adjacent to each other is twice or more an interval between the magnetic working substances (11) adjacent to each other.

As also illustrated in FIG. 5, the first magnet (25) and the second magnet (26) are arranged between the magnetic working substance (11) and the protrusion (23) of the core (21). The first magnet (25) and the second magnet (26) apply a magnetic field to the magnetic working substance (11) so that a magnetic flux flows in an in-plane direction of the magnetic working substance (11).

Specifically, when viewed in the axial direction, the first magnet (25) and the second magnet (26) radially extend along both sides of the protrusion (23) in the circumferential direction (see FIG. 4). A radially outer side of each of the first magnet (25) and the second magnet (26) is wider than a radially inner side.

The first magnet (25) is arranged with the N pole (an upper part in FIG. 5) closer to the magnetic working substance (11) and the S pole (a lower part in FIG. 5) closer to the protrusion (23) of the core (21). The second magnet (26) is arranged with the S pole (an upper part in FIG. 5) closer to the magnetic working substance (11) and the N pole (a lower part in FIG. 5) closer to the protrusion (23) of the core (21). The positions of the N pole and S pole of each of the first magnet (25) and the second magnet (26) may be reversed.

The first magnet (25) and the second magnet (26) rotate together with the core (21) in the circumferential direction relative to the magnetic working substances (11). When the first magnet (25) and the second magnet (26) are opposed to the magnetic working substance (11), a magnetic flux flows in the in-plane direction of the magnetic working substance (11). Note that broken arrows indicate the flow of the magnetic flux.

When the magnetic working substance (11) through which the magnetic flux is flowing is viewed in the axial direction, the first magnet (25) and the second magnet (26) are arranged along both sides of the magnetic working substance (11) in the circumferential direction. The magnetic field application unit (20) applies a magnetic field to the magnetic working substances (11).

The magnetic flux flows from the first magnet (25) toward the magnetic working substance (11). The magnetic flux flows inside the magnetic working substance (11) in the circumferential direction from the first magnet (25) toward the second magnet (26). The magnetic flux flows inside the protrusion (23) of the core (21) in the circumferential direction from the second magnet (26) toward the first magnet (25). Thus, the magnetic working substance (11) to which the magnetic field is applied generates heat.

Thereafter, the magnetic field application unit (20) is rotated so that the first magnet (25) and the second magnet (26) face an adjacent one of the magnetic working substances (11). As a result, the magnetic working substance (11) to which the magnetic field is first applied absorbs heat when the magnetic field is removed from the magnetic working substance (11). On the other hand, the adjacent magnetic working substance (11) to which the magnetic field is applied generates heat.

### -Operation of Refrigeration Apparatus-

Basic operation of the refrigeration apparatus (1) will be described with reference to FIG. 1. The refrigeration apparatus (1) alternately repeats a heating action and a cooling action. The heating action and the cooling action are switched in, for example, about 0.1 second to 1 second cycles.

### <Heating Action>

In the heating action, the pump (5) performs the first action, and the magnetic field application unit (20) performs a first magnetic field application. Specifically, in the heating action, the heating medium is discharged from the first port (6a) of the pump (5). At the same time, a magnetic field is applied to the magnetic working substances (11).

When the pump (5) discharges the heating medium in the first chamber (S1) to the low-temperature channel (2a), the heating medium in the low-temperature channel (2a) flows into the temperature control channel (10a) of the magnetic refrigerator (10). In the refrigeration apparatus (1) during the first magnetic field application, the magnetic working substances (11) radiate heat to the surroundings. Thus, the heating medium flowing through the temperature control channel (10a) is heated by the magnetic working substances (11). The heating medium heated in the temperature control channel (10a) flows into the high-temperature channel (2b) and flows through the high-temperature heat exchanger (4). The high-temperature heating medium in the high-temperature heat exchanger (4) heats a predetermined target to be heated (e.g., a secondary refrigerant or air). The heating medium in the high-temperature channel (2b) is sucked into the second chamber (S2) through the second port (6b) of the pump (5).

### <Cooling Action>

In the cooling action, the pump (5) performs the second action, and the magnetic field application unit (20) performs a second magnetic field application. Specifically, in the heating action, the heating medium is discharged from the second port (6b) of the pump (5), and simultaneously, the magnetic field is removed from the magnetic working substances (11).

When the pump (5) discharges the heating medium in the second chamber (S2) to the high-temperature channel (2b), the heating medium in the high-temperature channel (2b) flows into the temperature control channel (10a) of the magnetic refrigerator (10). In the refrigeration apparatus (1) during the second magnetic field application, the magnetic working substances (11) absorb heat from the surroundings. Thus, the heating medium flowing through the temperature control channel (10a) is cooled by the magnetic working substances (11). The heating medium cooled in the temperature control channel (10a) flows into the low-temperature channel (2a) and flows through the low-temperature heat exchanger (3). The low-temperature heating medium in the low-temperature heat exchanger (3) cools a predetermined target to be cooled (e.g., a secondary refrigerant or air). The heating medium in the low-temperature channel (2a) is sucked into the first chamber (S1) through the first port (6a) of the pump (5).

### -Advantages of First Embodiment-

According to the features of this embodiment, the magnetic field application unit (20) has the first member (21) (the core), the first magnet (25), and the second magnet (26). The first member (21) is axially spaced from the magnetic working substances (11). The first magnet (25) and the second magnet (26) are arranged between the first member (21) and the magnetic working substances (11). The first magnet (25) and the second magnet (26) apply a magnetic field so that a magnetic flux flows in the in-plane direction of the magnetic working substances (11). The first magnet (25) and the second magnet (26) are configured to move in the circumferential direction relative to the magnetic working substances (11).

This configuration shortens the magnetic path, thereby making it possible to downsize the entire magnetic refrigerator and improve the magnetic flux density. Using a magnet divided into multiple magnets, such as the first magnet (25) and the second magnet (26), makes assembly easier than using a single magnet having a strong magnetic force.

According to the features of this embodiment, when the magnetic working substance (11) through which the magnetic flux is flowing is viewed in the axial direction, the first magnet (25) and the second magnet (26) are arranged along both sides of the magnetic working substance (11) in the circumferential direction.

This allows a magnetic flux to flow in the circumferential direction of the magnetic working substances (11). Further, magnets of the same shape can be used for the assembly.

According to the features of this embodiment, the radially outer side of each of the first magnet (25) and the second magnet (26) is wider than the radially inner side.

Thus, adjusting the width of the magnet in accordance with the magnetic path can make the magnetic field strength in the magnetic working substance (11) constant.

According to the features of this embodiment, the refrigeration apparatus includes the magnetic refrigerator (10) and the heating medium circuit (2) that exchanges heat with the magnetic refrigerator (10). This can provide the refrigeration apparatus (1) including the magnetic refrigerator (10).

### -Variation of First Embodiment-

Each of the magnetic working substances (11) of the first embodiment may be provided with yokes (13).

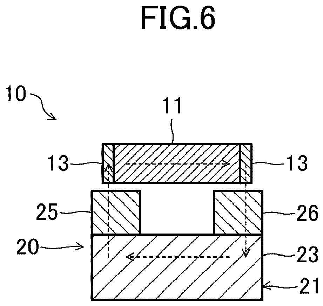

As illustrated in FIG. 6, the magnetic working substance (11) is provided with yokes (13) having a higher magnetic permeability than the magnetic working substance (11). The yokes (13) are arranged along both sides of the magnetic working substance (11) overlapping with the first magnet (25) and the second magnet (26) when viewed in the axial direction.

In the example shown in FIG. 6, the first magnet (25) and the second magnet (26) are arranged along both sides of the protrusion (23) of the core (21) in the circumferential direction. Thus, the yokes (13) are arranged along both sides of the magnetic working substance (11) in the circumferential direction.

The magnetic flux flows from the first magnet (25) toward the left yoke (13) in FIG. 6. The magnetic flux flows inside the magnetic working substance (11) in the circumferential direction from the left yoke (13) to the right yoke (13). The magnetic flux flows from the right yoke (13) toward the second magnet (26). The magnetic flux flows inside the protrusion (23) of the core (21) in the circumferential direction from the second magnet (26) toward the first magnet (25).

Thus, causing the magnetic flux to flow through the yokes (13) at both sides of the magnetic working substance (11) allows the magnetic field to be applied uniformly to the magnetic working substance (11).

### «Second Embodiment»

A second embodiment will be described below.

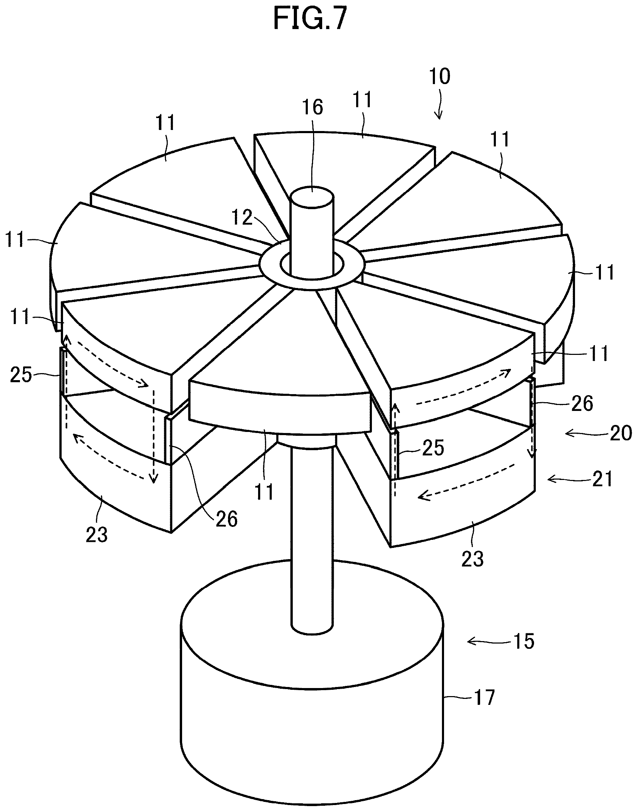

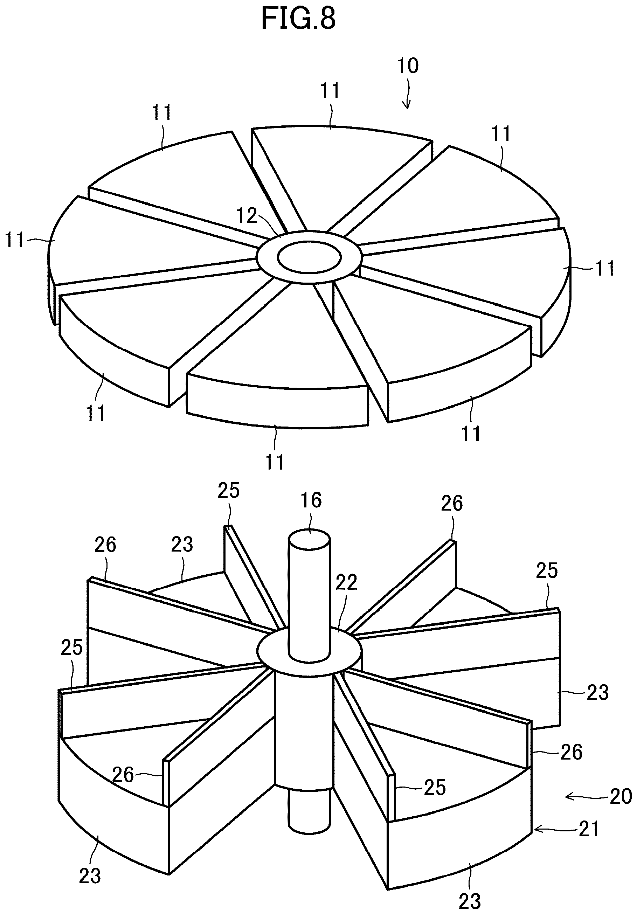

As illustrated in FIGS. 7 and 8, a magnetic refrigerator (10) includes magnetic working substances (11), a magnetic field application unit (20), and a rotation mechanism (15).

The magnetic field application unit (20) is axially spaced from the magnetic working substances (11). The magnetic field application unit (20) applies a magnetic field to the magnetic working substances (11). The magnetic field application unit (20) includes a core (21), a first magnet (25), and a second magnet (26).

The core (21) has a central portion (22) and multiple protrusions (23). The first magnet (25) and the second magnet (26) are arranged between the magnetic working substance (11) and the protrusion (23) of the core (21). The first magnet (25) and the second magnet (26) apply a magnetic field to the magnetic working substance (11) so that a magnetic flux flows in an in-plane direction of the magnetic working substance (11).

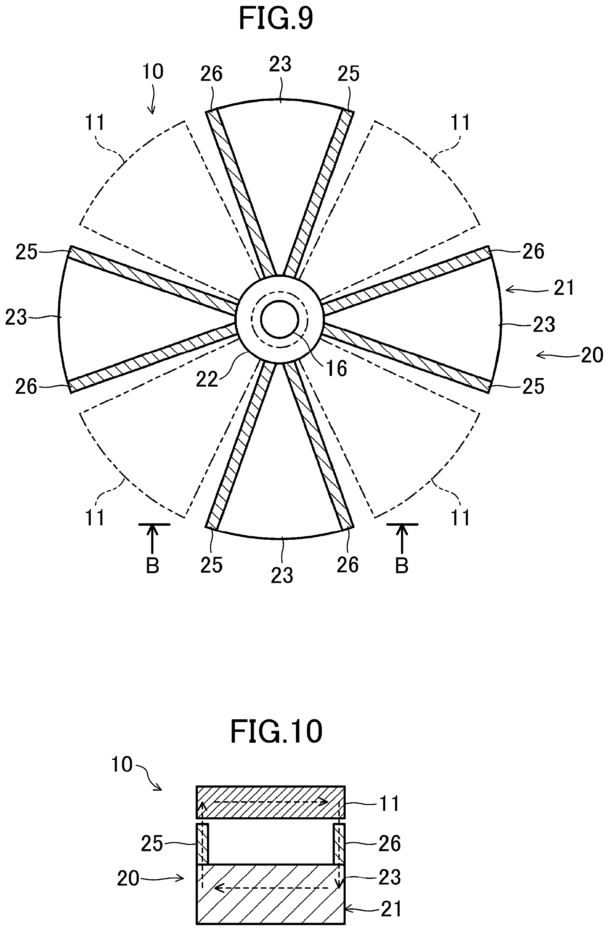

Specifically, when viewed in the axial direction, the first magnet (25) and the second magnet (26) radially extend along both sides of the protrusion (23) in the circumferential direction (see FIG. 9). Each of the first magnet (25) and the second magnet (26) has a substantially rectangular shape when viewed in the axial direction. In other words, each of the first magnet (25) and the second magnet (26) has the same width as viewed in the axial direction over the whole length in the radial direction. Thus, magnets having the same shape can be used as the first magnet (25) and the second magnet (26).

The first magnet (25) is arranged with the N pole (an upper part in FIG. 10) closer to the magnetic working substance (11) and the S pole (a lower part in FIG. 10) closer to the protrusion (23) of the core (21). The second magnet (26) is arranged with the S pole (an upper part in FIG. 10) closer to the magnetic working substance (11) and the N pole (a lower part in FIG. 10) closer to the protrusion (23) of the core (21). The positions of the N pole and S pole of each of the first magnet (25) and the second magnet (26) may be reversed.

The first magnet (25) and the second magnet (26) rotate together with the core (21) in the circumferential direction relative to the magnetic working substances (11). When the first magnet (25) and the second magnet (26) are opposed to the magnetic working substance (11), a magnetic flux flows in the in-plane direction of the magnetic working substance (11). Note that broken arrows indicate the flow of the magnetic flux.

When the magnetic working substance (11) through which the magnetic flux is flowing is viewed in the axial direction, the first magnet (25) and the second magnet (26) are arranged along both sides of the magnetic working substance (11) in the circumferential direction. The magnetic field application unit (20) applies a magnetic field to the magnetic working substances (11).

### -Variations of Second Embodiment-

### <First Variation>

Each of the magnetic working substances (11) of the second embodiment may be provided with yokes (13).

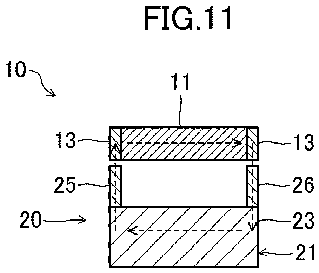

As illustrated in FIG. 11, the magnetic working substance (11) is provided with yokes (13) having a higher magnetic permeability than the magnetic working substance (11). The yokes (13) are arranged along both sides of the magnetic working substance (11) overlapping with the first magnet (25) and the second magnet (26) when viewed in the axial direction.

In the example shown in FIG. 11, the first magnet (25) and the second magnet (26) are arranged along both sides of the protrusion (23) of the core (21) in the circumferential direction. Thus, the yokes (13) are arranged along both sides of the magnetic working substance (11) in the circumferential direction.

### <Second Variation>

The magnetic field application unit (20) of the second embodiment may include a third magnet (27).

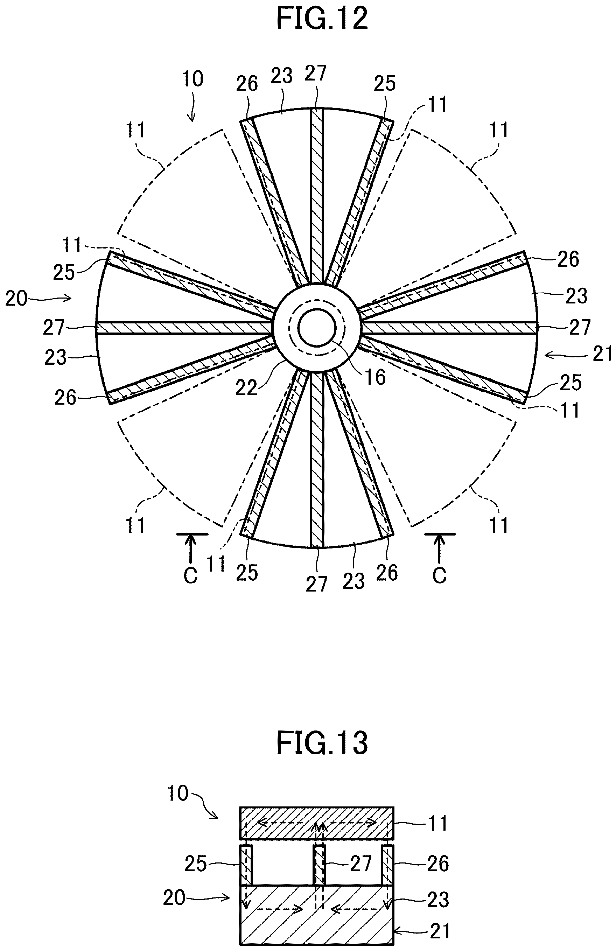

As illustrated in FIGS. 12 and 13, a first magnet (25), a second magnet (26), and a third magnet (27) are disposed between the magnetic working substance (11) and the protrusion (23) of the core (21). The first magnet (25), the second magnet (26), and the third magnet (27) apply a magnetic field to the magnetic working substance (11) so that a magnetic flux flows in an in-plane direction of the magnetic working substance (11).

Specifically, when viewed in the axial direction, the first magnet (25) and the second magnet (26) radially extend along both sides of the protrusion (23) in the circumferential direction (see FIG. 12). The third magnet (27) is disposed between the first magnet (25) and the second magnet (26) when viewed in the axial direction.

Each of the first magnet (25), the second magnet (26), and the third magnet (27) has a substantially rectangular shape when viewed in the axial direction. In other words, each of the first magnet (25), the second magnet (26), and the third magnet (27) has the same width as viewed in the axial direction over the whole length in the radial direction.

Each of the first magnet (25) and the second magnet (26) is arranged with the S pole (an upper part in FIG. 13) closer to the magnetic working substance (11) and the N pole (a lower part in FIG. 13) closer to the protrusion (23) of the core (21). The third magnet (27) is arranged with the N pole (an upper part in FIG. 13) closer to the magnetic working substance (11) and the S pole (a lower part in FIG. 13) closer to the protrusion (23) of the core (21). The positions of the N pole and S pole of each of the first magnet (25), the second magnet (26), and the third magnet (27) can be changed as appropriate.

The first magnet (25), the second magnet (26), and the third magnet (27) rotate together with the core (21) in the circumferential direction relative to the magnetic working substances (11). When the first magnet (25), the second magnet (26), and the third magnet (27) are opposed to the magnetic working substance (11), a magnetic flux flows in the in-plane direction of the magnetic working substance (11). Note that broken arrows indicate the flow of the magnetic flux.

Specifically, the magnetic flux flows from the third magnet (27) toward the magnetic working substance (11). The magnetic flux flows inside the magnetic working substance (11) in the circumferential direction from the third magnet (27) toward the first magnet (25) and the second magnet (26). The magnetic flux flows inside the protrusion (23) of the core (21) in the circumferential direction from the first magnet (25) and the second magnet (26) toward the third magnet (27).

### -Advantages of Second Variation of Second Embodiment-

According to the features of this variation, the magnetic field application unit (20) includes the third magnet (27). The third magnet (27) is disposed between the first magnet (25) and the second magnet (26) when viewed in the axial direction.

The third magnet (27) arranged in this way can make the magnetic field strength of the magnetic working substance (11) high and constant.

### «Third Embodiment»

A third embodiment will be described below.

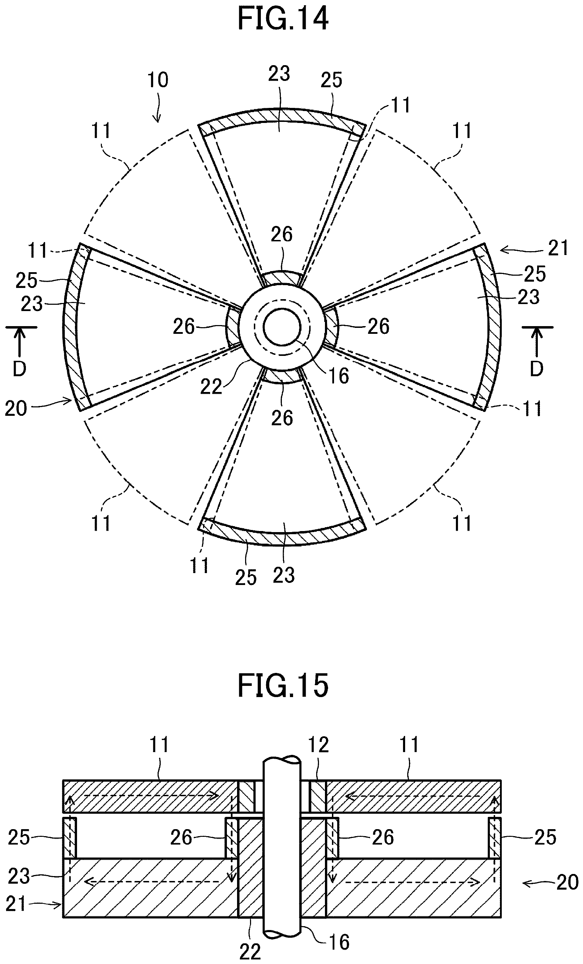

As illustrated in FIGS. 14 and 15, the magnetic field application unit (20) includes a core (21), a first magnet (25), and a second magnet (26). The first magnet (25) and the second magnet (26) are arranged between the magnetic working substance (11) and the protrusion (23) of the core (21). The first magnet (25) and the second magnet (26) apply a magnetic field to the magnetic working substance (11) so that a magnetic flux flows in an in-plane direction of the magnetic working substance (11).

Specifically, when viewed in the axial direction, the first magnet (25) and the second magnet (26) are arranged along both sides of the protrusion (23) in the radial direction (see FIG. 14). The first magnet (25) extends along a radially outer side of the protrusion (23). The second magnet (26) extends along a radially inner side of the protrusion (23).

The first magnet (25) is arranged with the N pole (an upper part in FIG. 15) closer to the magnetic working substance (11) and the S pole (a lower part in FIG. 15) closer to the protrusion (23) of the core (21). The second magnet (26) is arranged with the S pole (an upper part in FIG. 15) closer to the magnetic working substance (11) and the N pole (a lower part in FIG. 15) closer to the protrusion (23) of the core (21). The positions of the N pole and S pole of each of the first magnet (25) and the second magnet (26) may be reversed.

The first magnet (25) and the second magnet (26) rotate together with the core (21) in the circumferential direction relative to the magnetic working substances (11). When the first magnet (25) and the second magnet (26) are opposed to the magnetic working substance (11), a magnetic flux flows in the in-plane direction of the magnetic working substance (11). Note that broken arrows indicate the flow of the magnetic flux.

When the magnetic working substance (11) through which the magnetic flux is flowing is viewed in the axial direction, the first magnet (25) and the second magnet (26) are arranged along both sides of the magnetic working substance (11) in the radial direction. The magnetic field application unit (20) applies a magnetic field to the magnetic working substances (11).

The magnetic flux flows from the first magnet (25) toward the magnetic working substance (11). The magnetic flux flows inside the magnetic working substance (11) in the radial direction from the first magnet (25) toward the second magnet (26). The magnetic flux flows inside the protrusion (23) of the core (21) in the radial direction from the second magnet (26) toward the first magnet (25).

### -Advantages of Third Embodiment-

According to the features of this embodiment, when the magnetic working substance (11) through which the magnetic flux is flowing is viewed in the axial direction, the first magnet (25) and the second magnet (26) are arranged along both sides of the magnetic working substance (11) in the radial direction.

This allows a magnetic flux to flow in the radial direction of the magnetic working substances (11).

### -Variation of Third Embodiment-

### <Variation>

Each of the magnetic working substances (11) of the third embodiment may be provided with yokes (13).

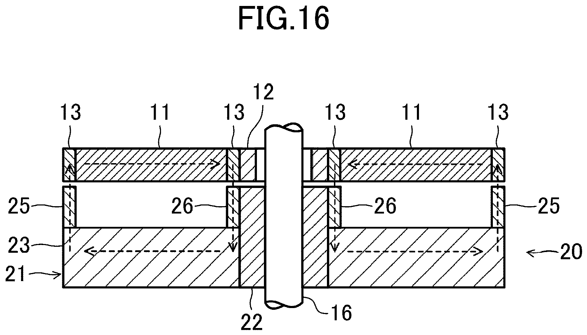

As illustrated in FIG. 16, the magnetic working substance (11) is provided with yokes (13) having a higher magnetic permeability than the magnetic working substance (11). The yokes (13) are arranged along both sides of the magnetic working substance (11) overlapping with the first magnet (25) and the second magnet (26) when viewed in the axial direction.

In the example shown in FIG. 16, the first magnet (25) and the second magnet (26) are arranged along both sides of the protrusion (23) of the core (21) in the radial direction. Thus, the yokes (13) are arranged along both sides of the magnetic working substance (11) in the radial direction.

### «Fourth Embodiment»

A fourth embodiment will be described below.

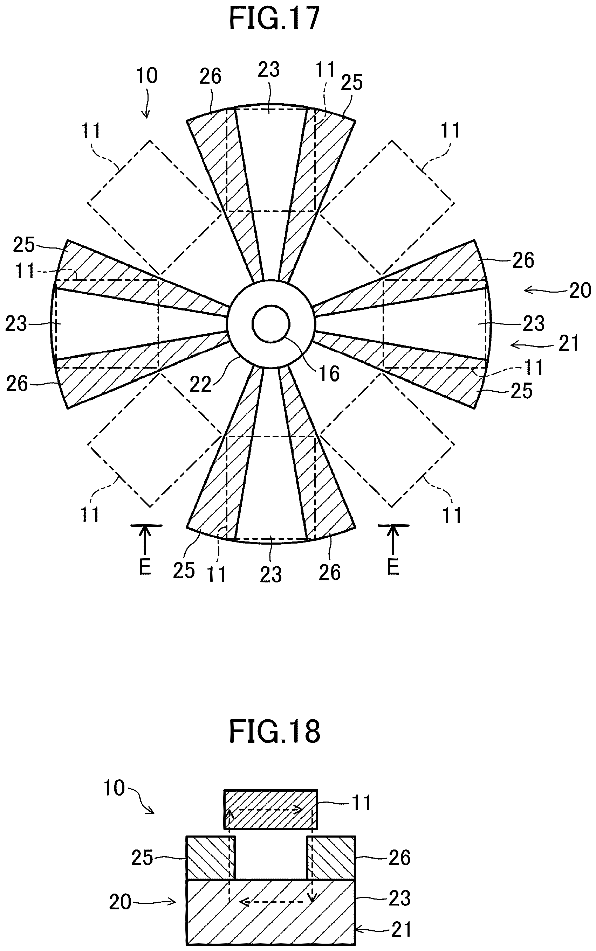

As illustrated in FIG. 17, multiple magnetic working substances (11) are arranged at intervals in the circumferential direction. In the example shown in FIG. 17, eight magnetic working substances (11), each having a substantially rectangular shape, are arranged at equal intervals in the circumferential direction.

As also illustrated in FIG. 18, the first magnet (25) and the second magnet (26) are arranged between the magnetic working substance (11) and the protrusion (23) of the core (21). The first magnet (25) and the second magnet (26) apply a magnetic field to the magnetic working substance (11) so that a magnetic flux flows in an in-plane direction of the magnetic working substance (11).

Specifically, when viewed in the axial direction, the first magnet (25) and the second magnet (26) extend in the radial direction along both sides of the protrusion (23) in the circumferential direction (see FIG. 18). A radially outer side of each of the first magnet (25) and the second magnet (26) is wider than a radially inner side.

When the magnetic working substance (11) through which the magnetic flux is flowing is viewed in the axial direction, the first magnet (25) and the second magnet (26) are arranged so as to overlap at least partially with both sides of the magnetic working substance (11) in the circumferential direction. The magnetic field application unit (20) applies a magnetic field to the magnetic working substances (11).

Thus, the magnetic field can be uniformly applied to the magnetic working substance (11) in the rectangular shape.

### «Other Embodiments»

The above-described embodiments may be modified as follows.

In the above-described embodiments, the first magnet (25) and the second magnet (26) rotate with the core (21), but the present invention is not limited to this example.

For example, the core (21) may be replaced with another magnetic working substance (11), so that the magnetic working substances (11) may be disposed on both pole sides of the first magnet (25) and the second magnet (26). With this configuration, the number of magnetic working substances (11) to which the magnetic field is simultaneously applied can be increased by rotating the first magnet (25) and the second magnet (26) relative to the magnetic working substances (11).

It will be understood that the embodiments and variations described above can be modified with various changes in form and details without departing from the spirit and scope of the claims. The embodiments and variations described above may be appropriately combined or modified by replacing the elements thereof, as long as the functions of the subject matters of the present disclosure are not impaired. In addition, the expressions of "first," "second," "third" and so on in the specification and claims are used to distinguish the terms to which these expressions are given, and do not limit the number and order of the terms.

### INDUSTRIAL APPLICABILITY

As can be seen from the foregoing description, the present disclosure is useful for a magnetic refrigerator and a refrigeration apparatus.

### DESCRIPTION OF REFERENCE CHARACTERS

- 1: Refrigeration Apparatus
- 2: Heating Medium Circuit
- 10: Magnetic Refrigerator
- 11: Magnetic Working Substance
- 13: Yoke
- 20: Magnetic Field Application Unit
- 21: First Member (Core)
- 25: First Magnet
- 26: Second Magnet
- 27: Third magnet

## Claims

1. A magnetic refrigerator, comprising:
a plurality of magnetic working substances (11) arranged at intervals in a circumferential direction; and
a magnetic field application unit (20) that makes a relative movement with respect to the magnetic working substances (11) in the circumferential direction and applies a magnetic field to the magnetic working substances (11), wherein
the magnetic field application unit (20) includes
a first member (21) spaced from the magnetic working substances (11) in an axial direction, and
a first magnet (25) and a second magnet (26) that are arranged between the first member (21) and the magnetic working substances (11) and apply a magnetic field so that a magnetic flux flows in an in-plane direction of the magnetic working substances (11), and
the first magnet (25) and the second magnet (26) are configured to move relative to the magnetic working substances (11) in the circumferential direction.

2. The magnetic refrigerator of claim 1, wherein
when the magnetic working substance (11) through which the magnetic flux is flowing is viewed in the axial direction, the first magnet (25) and the second magnet (26) are arranged along both sides of the magnetic working substance (11) in the circumferential direction.

3. The magnetic refrigerator of claim 2, wherein
each of the first magnet (25) and the second magnet (26) has a radially outer side wider than a radially inner side.

4. The magnetic refrigerator of claim 1, wherein
when the magnetic working substance (11) through which the magnetic flux is flowing is viewed in the axial direction, the first magnet (25) and the second magnet (26) are arranged along both sides of the magnetic working substance (11) in a radial direction.

5. The magnetic refrigerator of any one of claims 1 to 4, wherein
the magnetic field application unit (20) includes a third magnet (27), and
the third magnet (27) is disposed between the first magnet (25) and the second magnet (26) when viewed in the axial direction.

6. The magnetic refrigerator of any one of claims 1 to 5, wherein
each of the magnetic working substances (11) is provided with yokes (13) having a higher magnetic permeability than the magnetic working substance (11), and
the yokes (13) are arranged along both sides of the magnetic working substance (11) overlapping with the first magnet (25) and the second magnet (26) when viewed in the axial direction.

7. A refrigeration apparatus, comprising:
the magnetic refrigerator (10) of any one of claims 1 to 6; and
a heating medium circuit (2) configured to exchange heat with the magnetic refrigerator (10).
